# EUROPEAN PATENT SPECIFICATION

(11) **EP 4 546 740 B1**
(45) Date of publication and mention of the grant of the patent: **26.11.2025**
(21) Application number: 23838836.7
(22) Date of filing: 06.07.2023
(51) Int. Cl.: H04L 41/12, H04L 12/28, H04N 21/436, H04L 65/611, H04N 21/41, H04N 21/4363, H04N 21/442, H04N 21/443

(54) **SCREEN MIRRORING METHOD AND ELECTRONIC DEVICE**
BILDSCHIRMSPIEGELUNGSVERFAHREN UND ELEKTRONISCHE VORRICHTUNG
PROCÉDÉ DE DUPLICATION D'ÉCRAN ET DISPOSITIF ÉLECTRONIQUE

(30) Priority: 14.07.2022 CN 202210827833
(43) Date of publication of application: 30.04.2025
(73) Proprietor: Huawei Technologies Co., Ltd., Shenzhen, Guangdong 518129 (CN)
(72) Inventor: ZHU, Mengbo, Shenzhen, Guangdong 518129 (CN)
(74) Representative: Gill Jennings & Every LLP
(86) International application number: PCT/CN2023/106091
(87) International publication number: WO 2024/012344

(56) References cited:
- WO-A1-2015/180108
- CN-A- 113 055 976
- CN-A- 113 099 438
- CN-A- 113 099 438
- CN-A- 113 360 108
- CN-A- 113 360 108
- CN-A- 114 286 137

## Description

This application claims priority to Chinese Patent Application No. 202210827833.X, filed with the China National Intellectual Property Administration on July 14, 2022 and entitled "SCREEN CASTING METHOD AND ELECTRONIC DEVICE".

### TECHNICAL FIELD

Embodiments of this application relate to the field of wireless communication technologies, and in particular, to a screen casting method and an electronic device.

### BACKGROUND

Digital living network alliance (Digital Living Network Alliance, DLNA) screen casting means that a device sends, to another device, an address of a multimedia resource played by the device, so that the multimedia resource is played on the another device.

A screen casting device may multicast a screen casting service of the screen casting device. When there are a large quantity of screen casting devices, there are a large quantity of multicast messages, and a large amount of network bandwidth is occupied. The document CN 113360108, 7th September 2021 (2021-09-07), discloses a method where a sending end device discovers a receiving end device and configures its pre-emption capability using DLNA or other protocols, implying multicast-based discovery (e.g., via UPnP's SSDP in DLNA). The document CN 113099438, 9th July 2021 (2021-07-09), presents a wireless screen mirroring method based on IP network connection, enhancing Miracast.

### SUMMARY

Embodiments of this application provide a screen casting method and an electronic device, to reduce bandwidth occupied by multicast of a screen casting device.

According to a first aspect, an embodiment of this application provides a screen casting method. The screen casting method may be performed by an access point, a hub device, or a detection device. When the method is performed by the access point, a first device, a second device, and the detection device in an environment may all access the access point. When the method is performed by the hub device, the first device, the second device, and the detection device in the environment may all access the access point, and the access point may be connected to the hub device. A connection manner between the access point and the hub device may be a wired connection or a wireless connection. When the method is performed by the detection device, the detection device may be wirelessly connected to the first device and the second device in the environment. It should be understood that the first device is a screen casting source end device, and the second device is a screen casting destination end device.

For example, the method is performed by the access point. The access point may determine whether a screen casting intention exists in an environment. Whether the screen casting intention exists in the environment may be understood as whether there is a possibility of screen casting in the environment. When the screen casting intention exists in the environment and a digital living network alliance DLNA function of a second device in the environment is in a disabled state, the access point may send a first enabling indication to the second device, where the first enabling indication indicates the second device to enable the DLNA function.

When the second device enables the DLNA function, the access point sends a second enabling indication to the second device in response to receiving a first event from a first device, where the first event indicates that the first device has the screen casting intention, the second enabling indication indicates the second device to send multicast, and the multicast is used by the first device to discover the second device for screen casting.

That the first device has the screen casting intention may be understood as that there is a possibility that the first device performs screen casting. In a possible implementation, when a user starts a target application on the first device, the first device has the screen casting intention, and a screen casting type of the first device is a screen casting type supported by the target application; or when a user starts a target application on the first device, and the user inputs a screen casting operation to the first device, the first device has the screen casting intention.

In this application, the access point may indicate the second device to enable the DLNA function when the screen casting intention exists in the environment, and indicate the second device to send the notify multicast when the device has the screen casting intention. A router may adaptively control the second device to enable the DLNA function, and indicate the second device to send the notify multicast. This can prevent the second device from continuously sending the notify multicast, and reduces a waste of bandwidth resources.

When no screen casting intention exists in the environment and the DLNA function of the second device is in an enabled state, the access point may send a closing indication to the second device, where the closing indication indicates the second device to disable the DLNA function.

In a possible implementation, after enabling the DLNA function, the second device may send a first message to the access point, where the first message indicates that the second device enables the DLNA function, and the access point may store a status of the DLNA function of the second device as enabled. In a possible implementation, after closing the DLNA function, the second device may send a second message to the access point, where the second message indicates that the second device disables the DLNA function, and the access point may store the status of the DLNA function of the second device as disabled.

In this possible implementation, after enabling or disabling the DLNA function, the second device may send the status of the DLNA function to the access point, so that the access point can update the status of the DLNA function of the second device, and the access point can precisely control, based on the status of the DLNA function of the second device, the second device to enable or disable the DLNA function.

In this embodiment of this application, the access point may indicate, based on whether the screen casting intention exists in the environment, the second device to enable or disable the DLNA function, and when the first device has the screen casting intention, indicate the second device to send the notify multicast. The router may adaptively control the second device to enable or disable the DLNA function, and indicate the second device to send the notify multicast. This can reduce bandwidth occupied by the notify multicast, and reduces the waste of the bandwidth resources.

The following describes a process in which the access point determines that the screen casting intention exists in the environment.

First, the environment includes an access point. The access point may query whether the first device exists in a device that accesses the access point, that is, the access point detects whether the accessed device includes the screen casting source end device. When the first device exists in the device that accesses the access point, the access point determines that the screen casting intention exists in the environment. When the first device does not exist in the device that accesses the access point, the access point determines that no screen casting intention exists in the environment.

Second, the environment includes a detection device, and the detection device may obtain data and report the data to the access point, where the data is data related to a user. The access point may receive the data reported by the detection device, and determine, based on the data, whether the screen casting intention exists in the environment.

In a possible implementation, the detection device includes at least one of the following: a camera, a smart lock, and a smart peephole.

When the detection device includes the camera, the camera is configured to: capture a video of the environment and determine whether a user exists in the video. When detecting that the video includes the user, the camera may report a second event to the access point, where the second event indicates that the user exists in the video. In this case, data that is related to the user and that is obtained by the camera is the second event. If the access point receives the second event from the camera, the access point determines that the screen casting intention exists in the environment; or if the access point does not receive the second event from the camera, the access point determines that no screen casting intention exists in the environment.

In an embodiment, the camera may alternatively determine whether the screen casting intention exists in the environment. When detecting that the video includes the user, the camera determines that the screen casting intention exists in the environment; or when detecting that the video does not include the user, the camera determines that no screen casting intention exists in the environment.

The detection device includes the smart lock and the smart peephole, the smart lock is configured to detect a status of a door in the environment, and the smart peephole is configured to determine whether there is a user at the door. When the door is closed, the smart lock reports a locked state of the door to the access point. When detecting that there is the user at the door, the smart peephole may report a third event to the access point. The third event indicates that there is the user at the door.

If the access point receives the locked state from the smart lock, and does not receive the third event from the smart peephole, the access point determines that the screen casting intention exists in the environment; or if the access point receives the locked state from the smart lock, and receives the third event from the smart peephole, the access point determines that no screen casting intention exists in the environment. In this case, data that is related to the user and that is obtained by the smart lock includes the locked state. Data that is related to the user and that is obtained by the smart peephole includes the third event.

In an embodiment, the smart lock and the smart peephole may alternatively determine whether the screen casting intention exists in the environment. In this embodiment, when the door is closed, the smart lock may report the locked state of the door to the smart peephole. When detecting that there is the user at the door, the smart peephole may send the third event to the smart lock. The smart lock is used as an example. If the door is in the locked state, and no third event from the smart peephole is received, the smart lock determines that the screen casting intention exists in the environment; or if the door is in the locked state, and the third event from the smart peephole is received, the smart lock determines that no screen casting intention exists in the environment.

Third, the environment includes an access point and a detection device. The access point may query whether the first device exists in a device that accesses the access point, and determine, based on data (data related to a user) reported by the detection device, whether the screen casting intention exists in the environment. Determining is performed with reference to a plurality of types of data. This can improve accuracy of determining, by the access point, whether the screen casting intention exists in the environment.

For example, the detection device includes a camera. When the access point finds that the first device exists in the device that accesses the access point, but does not receive the first event from the camera, the router determines that no screen casting intention exists in the environment. When the access point, namely, the router determines that the first device exists in the device that accesses the access point, and receives the first event from the camera, the access point may determine that the screen casting intention exists in the environment.

In an embodiment, the detection device may alternatively determine, based on whether the first device exists in the device that accesses the access point and based on the data related to the user, whether the screen casting intention exists in the environment. In this embodiment, the access point may send, to the detection device, information of the device that accesses the access point.

In a possible implementation, the access point may further control, based on a screen casting type supported by the second device, the second device to enable or disable the DLNA function. When the second device accesses the access point, the access point may obtain a device type of the second device. For example, the second device may report the device type of the second device to the access point.

After the second device accesses the access point, the access point may receive capability information reported by the second device. The capability information reported by the second device includes that the second device supports the DLNA function. The access point may update the capability information of the second device based on the device type of the second device, where updated capability information of the second device includes the screen casting type supported by the second device. It should be understood that the device type of the second device may reflect the screen casting type specifically supported by the second device.

In this implementation, when there is at least one second device, the first event further indicates a screen casting type of the first device. In response to the first event, the access point may determine, from the at least one second device based on the updated capability information of the second device, a target second device that supports the screen casting type of the first device, and send the second enabling indication to the target second device.

For example, when the screen casting type of the first device is video screen casting, the access point may query, based on the updated capability information of the second device, the target second device that supports the video screen casting, and send the second enabling indication to the target second device that supports the video screen casting, and skip sending the second enabling indication to a second device that does not support the video screen casting.

In this implementation, the access point may precisely control the target second device to send the multicast, and a second device that does not support the screen casting type of the first device may not perform multicast, so that the bandwidth occupied by the multicast can be further reduced.

According to a second aspect, an embodiment of this application provides a screen casting method, applied to a first device. The first device is a screen casting source end device, and a device that interacts with the first device may be an access point or a detection device. In the method, the access point is used as an example. The first device sends a first event to the access point in response to a screen casting intention of the first device, where the first event indicates that the first device has the screen casting intention.

In a possible implementation, when a user starts a target application on the first device, the first device determines that the first device has the screen casting intention. Alternatively, when a user starts a target application on the first device, and the user inputs a screen casting operation to the first device, the first device determines that the first device has the screen casting intention.

In a possible implementation, the first event includes a screen casting type of the first device, and the screen casting type of the first device is a screen casting type supported by the target application.

According to a third aspect, an embodiment of this application provides a screen casting method, applied to a second device. The first device is a screen casting source end device, the second device is a screen casting destination end device, and a device that interacts with the second device may be an access point or a detection device. In the method, the access point is used as an example. The second device receives a first enabling indication from the access point, and the second device enables a DLNA function. The second device receives a second enabling indication from the access point, and performs multicast, where the multicast is used by the first device to discover the second device for screen casting.

In a possible implementation, after enabling the DLNA function, the second device sends a first message to the access point, where the first message indicates that the second device enables the DLNA function.

In a possible implementation, when accessing the access point, the second device may report a device type of the second device to the access point; and after accessing the access point, the second device may report, to the access point, capability information reported by the second device.

In a possible implementation, the second device receives a closing indication from the access point, and disables the DLNA function.

In a possible implementation, after closing the DLNA function, the second device sends a second message to the access point, where the second message indicates that the second device disables the DLNA function.

According to a fourth aspect, an embodiment of this application provides an electronic device. The electronic device may include a processor and a memory. The memory is configured to store computer-executable program code. The program code includes instructions. When the processor executes the instructions, the instructions cause the electronic device to perform the method according to the first aspect to the third aspect.

According to a fifth aspect, an embodiment of this application provides a computer program product including instructions. When the computer program product is run on a computer, the computer performs the method according to the first aspect to the third aspect.

According to a sixth aspect, an embodiment of this application provides a computer-readable storage medium. The computer-readable storage medium stores instructions, and when the instructions are run on a computer, the computer performs the method according to the first aspect to the third aspect.

For beneficial effect of the possible implementations of the second aspect to the sixth aspect, refer to the beneficial effect brought by the first aspect. Details are not described herein again.

### BRIEF DESCRIPTION OF DRAWINGS

FIG. 1a to FIG. 1c are diagrams of DLNA screen casting;
FIG. 2A is a diagram of a system architecture to which a screen casting method is applicable according to an embodiment of this application;
FIG. 2B is another diagram of a system architecture to which a screen casting method is applicable according to an embodiment of this application;
FIG. 3A and FIG. 3B each are a schematic flowchart of an embodiment of a screen casting method according to an embodiment of this application;
FIG. 4Aa to FIG. 4Ac are diagrams of a scenario according to an embodiment of this application;
FIG. 4B is a diagram of another scenario according to an embodiment of this application;
FIG. 4C is a diagram of another scenario according to an embodiment of this application;
FIG. 4D is a diagram of another scenario according to an embodiment of this application;
FIG. 4Ea and FIG. 4Eb are diagrams of another scenario according to an embodiment of this application;
FIG. 4Fa to FIG. 4Fc are diagrams of another scenario according to an embodiment of this application;
FIG. 5A and FIG. 5B each are a schematic flowchart of another embodiment of a screen casting method according to an embodiment of this application;
FIG. 6A and FIG. 6B each are a schematic flowchart of another embodiment of a screen casting method according to an embodiment of this application;
FIG. 7 is a schematic flowchart of another embodiment of a screen casting method according to an embodiment of this application; and
FIG. 8 is a diagram of a structure of an electronic device according to an embodiment of this application.

### DESCRIPTION OF EMBODIMENTS

A digital living network alliance (Digital Living Network Alliance, DLNA) screen casting procedure includes two phases: device discovery and device control. The device discovery phase means that a first device (a screen casting source end device, for example, a mobile phone) discovers a second device (a screen casting destination end device, for example, a television). The device control phase means that the first device sends an address of a multimedia resource to the second device, and the second device obtains the multimedia resource based on the address of the multimedia resource, to play the multimedia resource. In the following embodiments, an example in which "the first device indicates the screen casting source end device" and "the second device indicates the screen casting destination end device" is used for description.

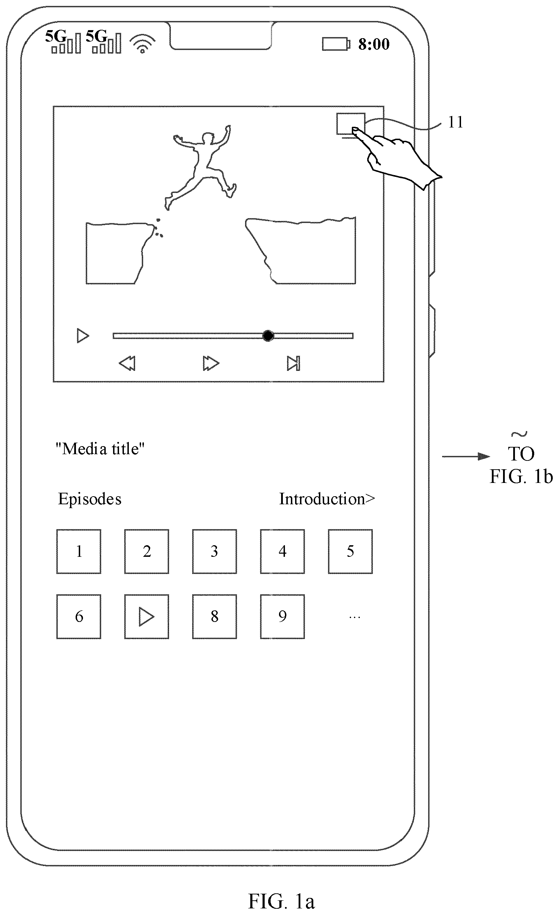

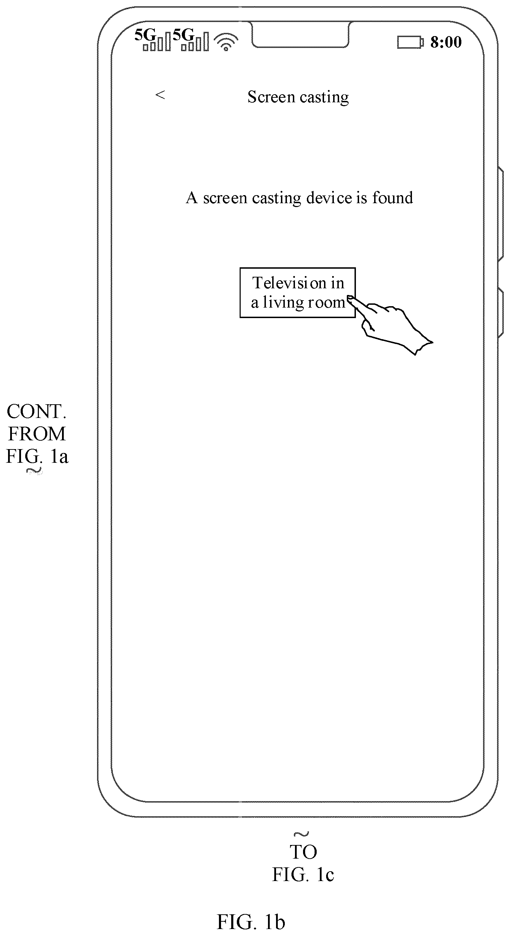

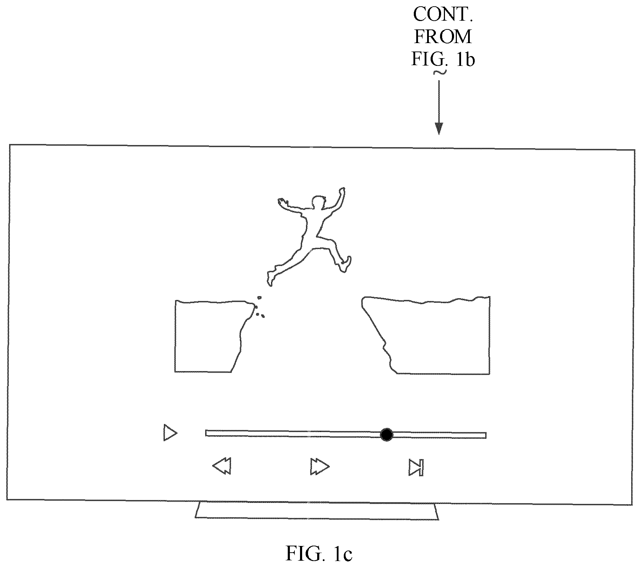

FIG. 1a to FIG. 1c are diagrams of DLNA screen casting. Refer to FIG. 1a. A user plays a video by using a mobile phone, and a screen casting control 11 may be displayed on a playing interface of the video. The user taps the screen casting control 11, to trigger the mobile phone to discover a screen casting device (for example, a television). As shown in FIG. 1b, the mobile phone may display an identifier of the television on an interface, for example, television in a living room. After discovering the television, the mobile phone may send an address of a video resource to the television, to cast the video onto the television for playing, as shown in FIG. 1c.

In an embodiment, the first device may include but is not limited to a device that has a DLNA function like a mobile phone, a tablet computer (portable Android device, PAD), a personal computer (personal computer, PC), a personal digital assistant (personal digital assistant, PDA), a handheld device that has a wireless communication function, a computing device, or a wearable device.

The second device may include but is not limited to a device that has a DLNA function like a speaker, a television, a smart screen, a vehicle-mounted device, a virtual reality (virtual reality, VR) terminal device, an augmented reality (augmented reality, AR) terminal device, a wireless terminal in industrial control (industrial control), or a device in a smart home (smart home).

It should be understood that the second device having the DLNA function may be understood as that the second device may be scanned and discovered by the first device, and may play a multimedia resource transmitted by the source end device through screen casting.

In an embodiment, the multimedia resource may include but is not limited to an audio, a video, an audio and a video, and the like.

In a DLNA screen casting process, a device discovery phase may include active device discovery and passive device discovery. The active device discovery means that the first device sends discovery (search) multicast to a specified address and port, and after receiving the search multicast, the second device responds to the first device, that is, the first device discovers the second device. The passive device discovery means that the second device sends notify (Notify) multicast, and the first device detects the notify multicast from the second device, so that the first device can also discover the second device. The screen casting method in embodiments of this application is applicable to a passive device discovery scenario.

In the passive device discovery scenario, after the second device accesses a network, the second device may send the notify multicast every 3s according to a DLNA screen casting protocol. Currently, there are a large quantity of second devices in a home environment. For example, the home environment includes a screen casting device like a speaker, a television, or a smart screen. The screen casting device like the speaker, the television, or the smart screen sends the notify multicast every 3s, and occupies a large amount of network bandwidth. When no first device performs screen casting, the notify multicast wastes bandwidth resources.

It should be understood that the screen casting method provided in embodiments of this application is not only applicable to the home environment, but also applicable to another environment, for example, a factory or an office. This is not limited in embodiments of this application. In the following embodiments, the home environment is used as an example for description.

In an embodiment, a period in which the second device sends the notify multicast may be increased, to reduce a notify multicast quantity, thereby reducing the bandwidth occupied by the notify multicast. For example, the period in which the second device sends the notify multicast is adjusted from 3s to 15s or even longer. In this embodiment, because the period of the notify multicast is increased, when the first device discovers the second device, duration in which the first device discovers the second device is increased, and user experience is poor.

In an embodiment, a switch for enabling and disabling the DLNA function of the second device may be set on the second device or a device bound to the second device. When screen casting is not required, the user may disable the switch, to disable the DLNAfunction of the second device, so as to prevent the notify multicast of the second device from occupying the bandwidth. When screen casting is required, the user may enable the switch, to enable the DLNA function of the second device.

In this embodiment, the user needs to manually enable or disable the DLNA function of the second device, and an operation is complex. In addition, after the user enables the DLNA function of the second device, if the user forgets to disable the DLNA function of the second device, the notify multicast also occupies a large amount of bandwidth.

Embodiments of this application provide a screen casting method, so that a DLNA function of a second device can be adaptively enabled or disabled with reference to detection performed by a detection device or an access point (access point, AP) in an environment. For example, the DLNA function of the second device is enabled when it is determined that a screen casting intention exists in the environment, and the DLNA function of the second device is disabled when it is determined that no screen casting intention exists in the environment. The DLNAfunction of the second device is adaptively enabled or disabled, to prevent the second device from continuously sending notify multicast. This further reduces bandwidth occupied by the multicast and a waste of bandwidth resources, and reduces power consumption of the second device. In addition, a user does not need to perform a manual operation, so that user experience can be improved.

In an embodiment, that the screen casting intention exists in the environment may be understood as that the user in the environment may perform DLNA-based screen casting.

Before the screen casting method provided in embodiments of this application is described, a system architecture to which the screen casting method provided in embodiments of this application is applicable is first described.

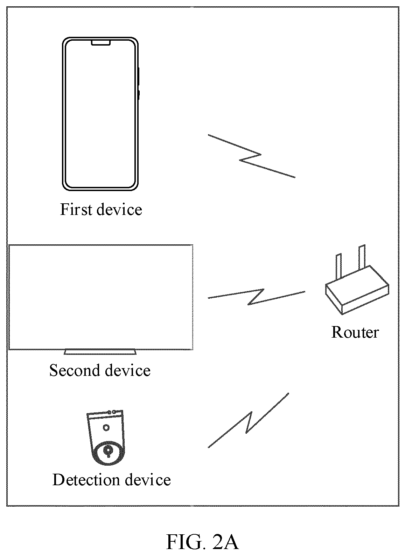

FIG. 2A is a diagram of a system architecture to which a screen casting method is applicable according to an embodiment of this application. Refer to FIG. 2A. The system structure may include a first device, a second device, and an access point. In an embodiment, the access point may include but is not limited to a router, customer-premises equipment (customer-premises equipment, CPE), and the like. In FIG. 2A and the following embodiments, an example in which the access point is the router is used for description.

The router is configured to determine, based on information of a device that accesses the router, to enable or disable a DLNA function of the second device.

In an embodiment, the system structure may further include a detection device.

The detection device is configured to: obtain data related to a user, and report the data related to the user to the router.

In an embodiment, the detection device may include but is not limited to a camera, a smart lock, a smart peephole, a robot, and the like in a home environment. The robot may be, for example, a cleaning robot or a robot dog. In FIG. 2A, an example in which the first device is a mobile phone, the second device is a television, and the detection device is the camera is used for description. For example, the camera may capture a video, and the camera may determine, based on the video, whether the video includes a user. Data that is related to the user and that is obtained by the camera includes: whether the video includes the user.

The router is further configured to determine, based on the information of the device that accesses the router and/or the data that is related to the user and that is from the detection device, to enable or disable the DLNA function of the second device.

In an embodiment, the router may be used as the detection device, and may determine, based on the information of the device that accesses the router, whether a screen casting intention exists in the environment.

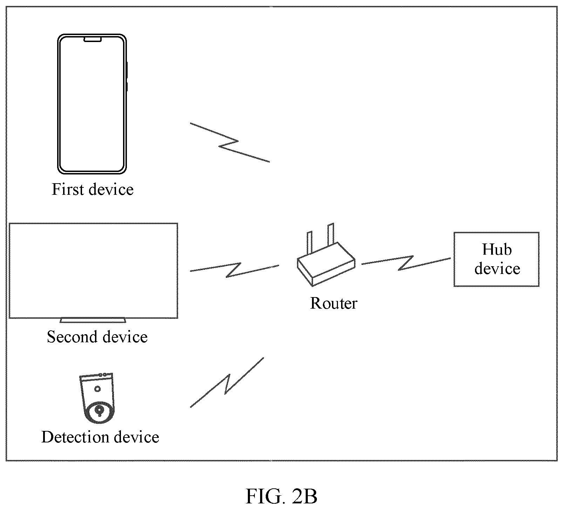

FIG. 2B is another diagram of a system architecture to which a screen casting method is applicable according to an embodiment of this application. Refer to FIG. 2B. The system structure may include a first device, a second device, a detection device, a router, and a hub device.

For a function of the detection device, refer to the descriptions in FIG. 2A.

The router may report, to the hub device, information of a device that accesses the router and/or data that is related to a user and that is from the detection device.

The hub device is configured to determine, based on the information of the device that accesses the router and/or the data that is related to the user and that is from the detection device, to enable or disable a DLNA function of the second device.

In an embodiment, the router and the hub device may be integrated into one device, or may be separated and independent devices. In the following embodiments, an example in which the router and the hub device may be integrated into one device is used for description. In a scenario in which the router and the hub device are separately disposed, the router may interact with the hub device, to implement the screen casting method provided in embodiments of this application.

The following describes the screen casting method provided in embodiments of this application with reference to specific embodiments. The following several embodiments may be combined with each other, and a same or similar concept or process may not be described repeatedly in some embodiments.

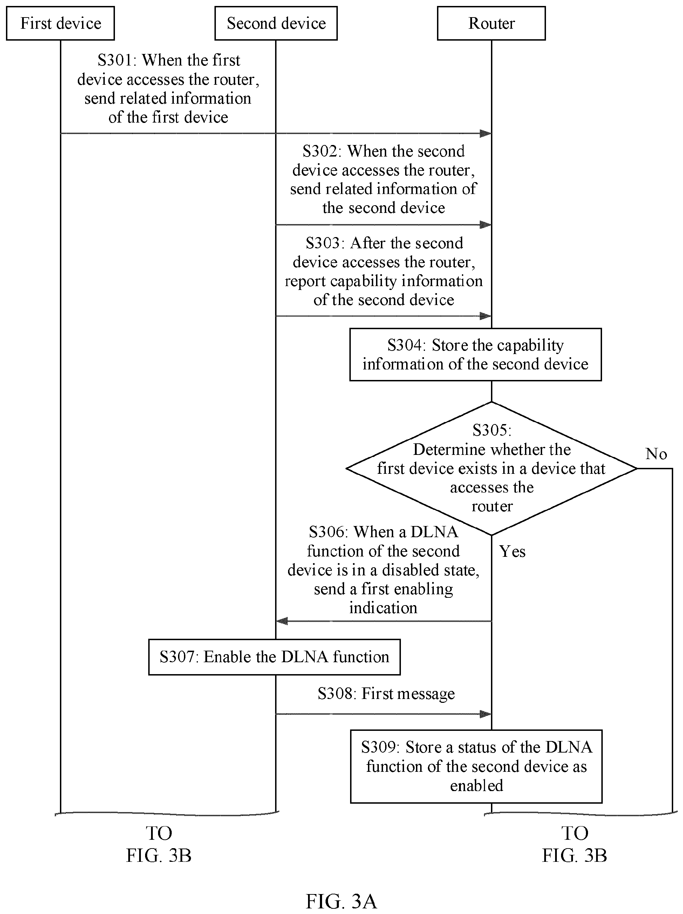

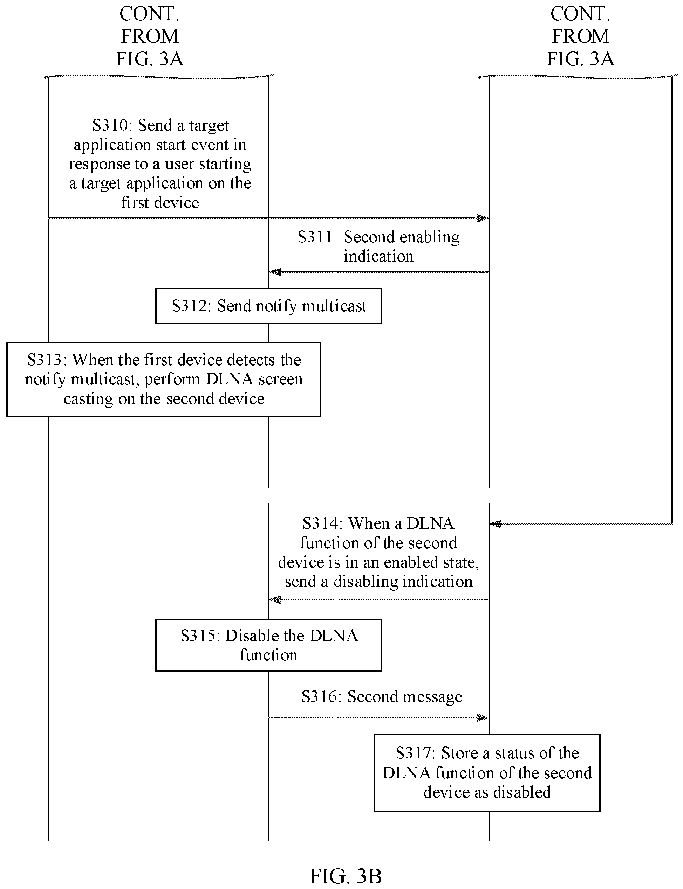

FIG. 3A and FIG. 3B each are a schematic flowchart of an embodiment of a screen casting method according to an embodiment of this application. Refer to FIG. 3A and FIG. 3B. The screen casting method provided in this embodiment of this application may include the following steps.

S301: When a first device accesses a router, the first device sends related information of the first device to the router.

For example, a user may input an account and a password on the first device, so that the first device accesses the router. Alternatively, when the first device accessed the router before, the first device may directly access the router. A manner in which the first device accesses the router is not limited in embodiments of this application.

The related information of the first device may include but is not limited to an identifier of the first device and a device type of the first device. The identifier of the first device may be a name or a model of the first device, and the device type of the first device may be, for example, a mobile phone, a PC, or a PAD.

In an embodiment, the router may store the related information of the first device.

In an embodiment, the router may store device information. The device information includes an identifier and a device type of a device that accesses the router. When the first device accesses the router, the device information includes the identifier and the device type of the first device.

In an embodiment, for S301, refer to related descriptions in the 802.11b standard protocol.

S302: When a second device accesses the router, the second device sends related information of the second device to the router.

For S302, refer to the related descriptions in S301. There is no sequence between S302 and S301, and S302 and S301 may be performed simultaneously.

The related information of the second device may include but is not limited to an identifier of the second device and a device type of the second device. The identifier of the second device may be a name or a model of the second device, and the device type of the second device may be, for example, a speaker, a smart screen, or a television.

In an embodiment, the router may store the related information of the second device. In an embodiment, when the second device accesses the router, the device information includes the identifier and the device type of the second device.

S303: After the second device accesses the router, the second device reports capability information of the second device to the router.

After the second device accesses the router, the second device may initiate registration at the router, to send the capability information of the second device to the router. The capability information may be understood as a capability of the second device or a service supported by the second device. In other words, after the second device accesses the router, the second device may report the capability information of the second device to the router.

For example, for a camera, capability information of the camera may include that the camera can be enabled or disabled, and rotated, and brightness of the camera can be adjusted. The second device is a screen casting device, and the capability information of the second device includes supporting a DLNA function. In an embodiment, when a type of the second device is different, the capability information of the second device may further include another capability. Details are not described in this embodiment of this application.

S304: The router stores the capability information of the second device.

In an embodiment, when reporting the capability information of the second device to the router, the second device may carry the identifier of the second device, so that the router may correspondingly store the identifier of the second device and the capability information of the second device.

It should be noted that the capability information reported by the second device includes that the DLNA function is supported, but a specific type of screen casting, for example, audio screen casting or video screen casting, supported by the second device is not marked. In an embodiment, the router may update the capability information of the second device based on the device type of the second device and the capability information reported by the second device. Updated capability information of the second device includes the screen casting type specifically supported by the second device.

For example, if the device type of the second device is a speaker, the router may update the capability information of the second device from "supporting the DLNA function" to "supporting the DLNA function and supporting the audio screen casting". If the device type of the second device is a television or a smart screen, the router may update the capability information of the second device from "supporting the DLNA function" to "supporting the DLNA function and supporting the audio and video screen casting".

In this embodiment, the router may store the updated capability information of the second device.

It should be understood that S301 to S304 are a process in which the device accesses the router and the device is registered. The following describes a process in which the router controls the second device to enable or disable the DLNA function.

S305: The router determines whether the first device exists in the device that accesses the router. If the first device exists in the device that accesses the router, S306 is performed; or if the first device does not exist in the device that accesses the router, S314 is performed.

In an embodiment, the router may query the device information, to determine whether a device that can initiate screen casting, for example, a mobile phone, a PC, or a tablet computer, exists in the information of the device that accesses the router.

S306: When the DLNA function of the second device is in a disabled state, the router sends a first enabling indication to the second device that accesses the router, where the first enabling indication indicates the second device to enable the DLNA function.

In an embodiment, the router may query capability information, to determine the second device that has the DLNA function. When the first device exists in the device that accesses the router, the first device may perform DLNA screen casting, that is, a screen casting intention exists in an environment. In this case, when the DLNA function of the second device is in the disabled state, the router may send the first enabling g indication to the second device that accesses the router, to indicate the second device to enable the DLNA function.

It should be understood that, when the DLNA function of the second device is in an enabled state, S306 to S308 may not be performed, and S310 is directly performed.

S307: The second device enables the DLNA function.

It should be noted that, in S307, the second device enables the DLNA function, but does not send notify multicast.

S308: The second device feeds back a first message to the router.

The first message indicates that the second device enables the DLNA function.

S309: The router stores a status of the DLNA function of the second device as enabled.

S310: The first device sends a target application start event to the router in response to the user starting the target application on the first device.

In an embodiment, the target application start event may be referred to as a first event, and the first event indicates that the first device has the screen casting intention.

The target application start event indicates that the first device starts the target application, that is, the first device has the screen casting intention. The target application is an application that has a multimedia resource screen casting function. For example, the target application may include but is not limited to a video application that can initiate screen casting, an audio application that can initiate screen casting, and a social application that can initiate screen casting.

To more precisely determine a screen casting requirement of the user, in an embodiment, the first device may send the target application start event to the router when detecting that the user inputs a screen casting operation. For example, if the user operates a screen casting control on an interface of the target application, the first device may be triggered to send the target application start event to the router. For example, the user may alternatively trigger, in a voice interaction manner, the first device to send the target application start event to the router. A manner in which the user inputs the screen casting operation is not limited in embodiments of this application.

S311: The router sends a second enabling indication to the second device that accesses the router, where the second enabling indication indicates the second device to send the notify multicast.

When the user starts the target application on the first device, screen casting may be performed. In S307, the second device enables the DLNA function, but does not send the notify multicast. To enable the first device to quickly discover the second device during screen casting of the first device, in this embodiment of this application, when the target application is started on the first device, the router may send the second enabling indication to the second device that accesses the router, to indicate the second device to send the notify multicast. The notify multicast is used by the first device to discover the second device.

There is no sequence between S310 and S311 and S307 and S308, and S310 and S311, and S307 and S308 may be performed simultaneously.

S312: The second device sends the notify multicast.

S313: When the first device detects the notify multicast, the first device performs DLNA screen casting on the second device.

In this embodiment of this application, a process in which the first device performs DLNA screen casting on the second device is not described in detail. For details, refer to the related descriptions in FIG. 1a to FIG. 1c.

S314: When the DLNA function of the second device is in the enabled state, the router sends a closing indication to the second device, where the closing indication indicates the second device to disable the DLNA function.

The first device does not exist in the device that accesses the router, and the device that can initiate screen casting does not exist in the environment, that is, no screen casting intention exists in the environment. Therefore, when the DLNA function of the second device is in the enabled state, the router may send the closing indication to the second device, to indicate the second device to disable the DLNA function. It should be understood that, after the second device disables the DLNA function, the second device does not send the notify multicast, so that bandwidth occupation can be reduced.

In an embodiment, when the first device does not exist in the device that accesses the router, and the DLNA function of the second device is in the disabled state, the router may not respond. For example, the router does not send the closing indication to the second device. In an embodiment, when the first device does not exist in the device that accesses the router, the router may continue to perform S305 when the device information is updated.

S315: The second device disables the DLNA function.

S316: The second device feeds back a second message to the router.

The second message indicates that the second device disables the DLNA function.

S317: The router stores a status of the DLNA function of the second device as disabled.

In conclusion, in an embodiment, S305 may be replaced with that the router determines whether the first device exists in the device that accesses the router, and detects the status of the DLNA function of the second device.

When the router determines that the first device exists in the device that accesses the router, and the DLNA function of the second device is in the disabled state, S306 is performed. When the router determines that the first device exists in the device that accesses the router, and the DLNA function of the second device is in the enabled state, S310 is performed. When the router determines that the first device does not exist in the device that accesses the router, and the DLNA function of the second device is in the enabled state, S314 is performed. When the router determines that the first device does not exist in the device that accesses the router, and the DLNA function of the second device is in the disabled state, the router does not respond.

In an embodiment, some steps shown in FIG. 3A and FIG. 3B are optional steps, and the steps may be combined with each other.

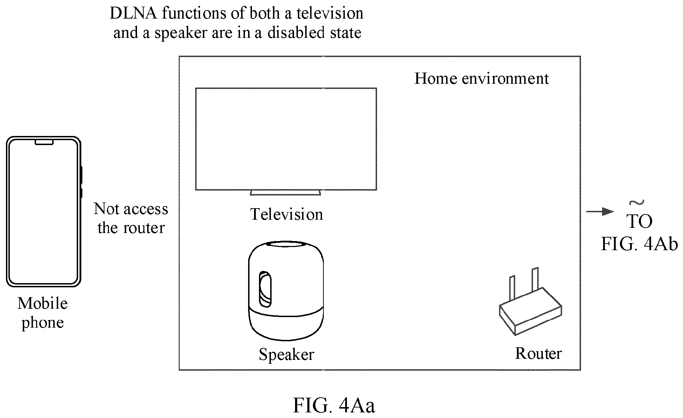

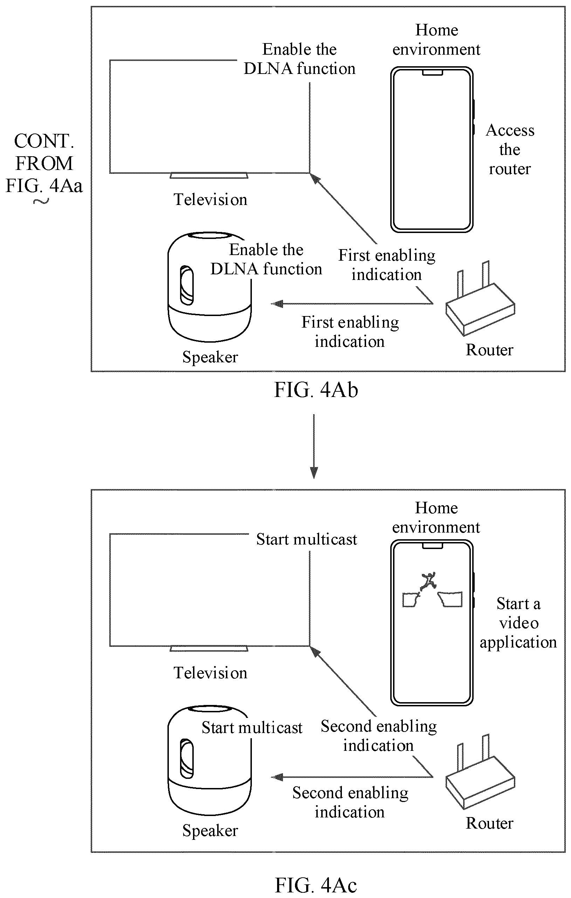

FIG. 4Aa to FIG. 4Ac are diagrams of a scenario according to an embodiment of this application. In a home environment, for example, the second device includes a speaker and a television, and the first device is a mobile phone. In FIG. 4Aa to FIG. 4Ac, an example in which DLNA functions of both the speaker and the television are in a disabled state is used. Refer to FIG. 4Aa. When the mobile phone is outside the home environment, the mobile phone does not access a router. The router determines that the first device does not exist in a device that accesses the router, and because the DLNA functions of both the speaker and the television are in the disabled state, the router may not respond. Refer to FIG. 4Ab, when a user enters the home environment with the mobile phone, the mobile phone may access the router. If the router determines that the first device exists in the device that accesses the router, the router may send the first enabling indication to both the speaker and the television. The speaker and the television enable the DLNA function in response to the first enabling indication.

Refer to FIG. 4Ac. The user starts a video application on the mobile phone, and the video application has a function of initiating screen casting. The mobile phone may send the target application start event to the router. The router sends the second enabling indication to both the speaker and the television in response to the target application start event. The speaker and the television may both send the notify multicast in response to the second enabling indication.

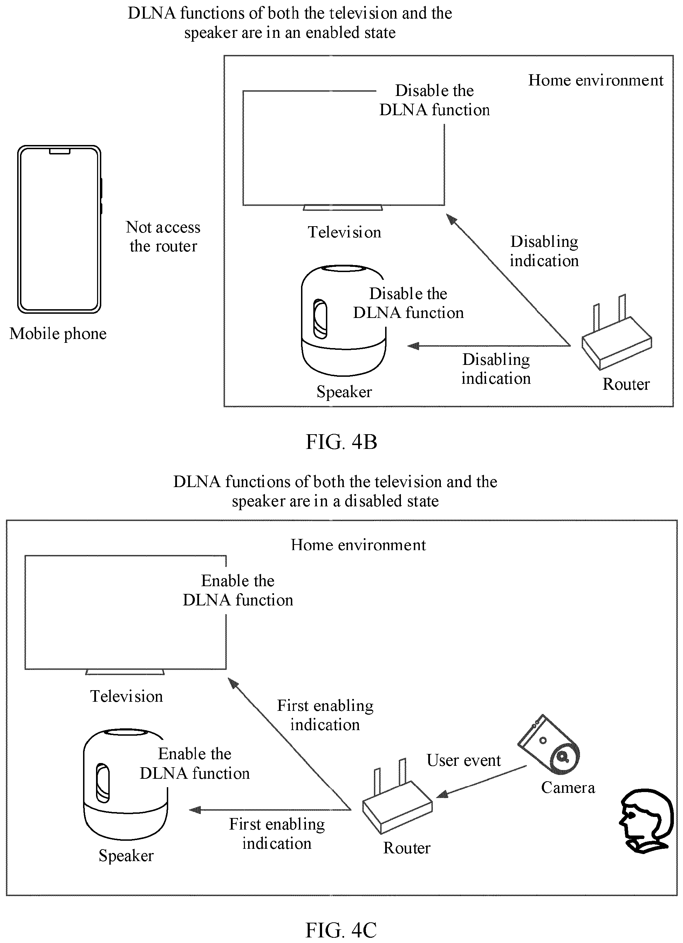

FIG. 4B is a diagram of another scenario according to an embodiment of this application. In FIG. 4B, an example in which the DLNA functions both the speaker and the television are in an enabled state is used. Refer to FIG. 4B. When the mobile phone is outside the home environment, the mobile phone does not access the router. The router determines that the first device does not exist in the device that accesses the router, and because the DLNA functions of both the speaker and the television are in an enabled state, the router may send the closing indication to both the speaker and the television, and the speaker and the television disable the DLNA function in response to the closing indication. For a scenario in which the mobile phone enters the home environment, refer to the related descriptions in FIG. 4Ab and FIG. 4Ac.

In this embodiment of this application, the router determines, based on whether the first device exists in the device that accesses the router, whether the screen casting intention exists in the environment, to indicate the second device to enable or disable the DLNAfunction. In addition, in the scenario in which the user starts the target application, that is, the user may use the screen casting function of the target application, the router indicates the second device to send the notify multicast. The router may adaptively control the second device to enable or disable the DLNA function, and indicate the second device to send the notify multicast. This is simple and flexible without a user operation. In addition, only when the user really has the screen casting intention, the router controls and indicates the second device to start to send the notify multicast, so that the second device is controlled to perform multicast in a targeted manner. This can avoid a problem that it is difficult for the first device to discover the second device, reduce the bandwidth occupied by the notify multicast, and reduce the waste of the bandwidth resources.

The embodiment shown in FIG. 3A and FIG. 3B describes an example in which the router may determine whether the screen casting intention exists in the environment. In an embodiment, the detection device in the environment may alternatively determine whether the screen casting intention exists in the environment, so that the router controls the second device to enable or disable the DLNA function. In an embodiment, the detection device may include but is not limited to a camera, a smart lock, a smart peephole, a robot, and the like.

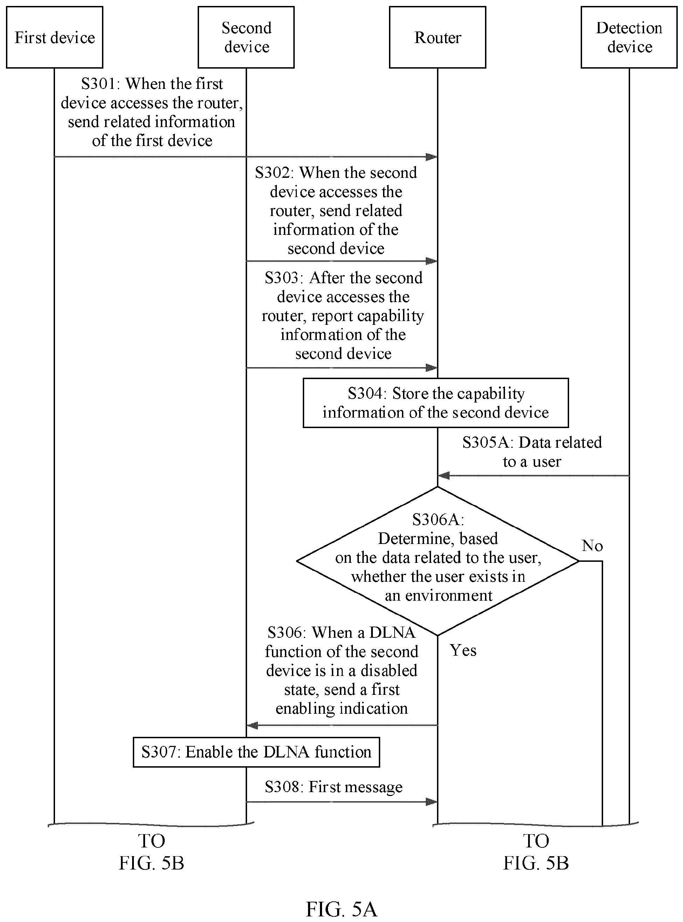

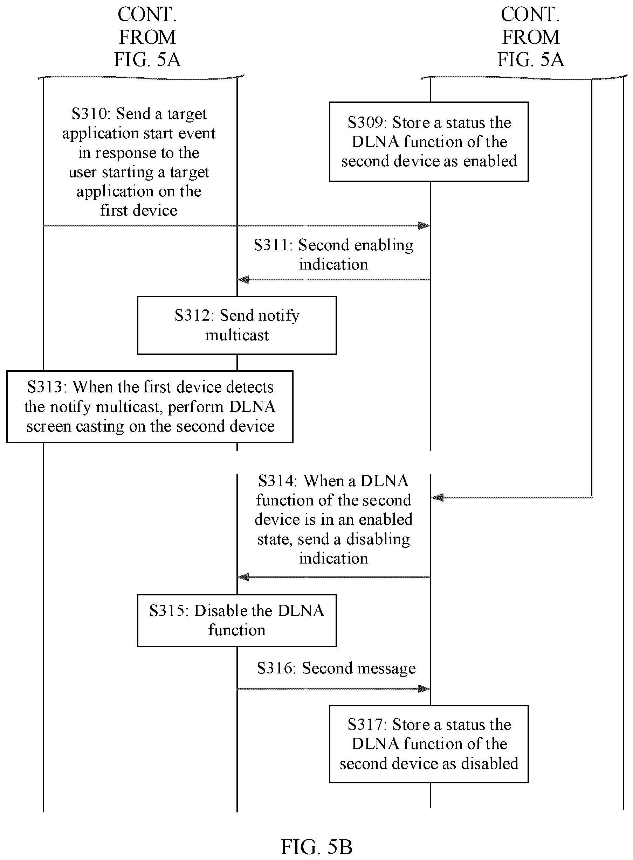

In this embodiment, refer to FIG. 5A and FIG. 5B. S305 may be replaced with S305A and S306A.

S305A: The detection device obtains data related to a user, and sends the data related to the user to the router.

In an embodiment, the data related to the user may include a result of determining, by the detection device, whether a user exists in the environment and/or user behavior data.

In an embodiment, the detection device may access the router to interact with the router. When accessing the router, the detection device may send related information of the detection device to the router. When the detection device accesses the router, the device information includes an identifier and a device type of the detection device.

After the detection device is powered on, the data related to the user may be obtained.

First, for example, the detection device is the camera. For example, the camera is installed in the home environment, and the camera may capture a video. In an embodiment, the camera may send the captured video to the router, and the router analyzes the video to determine whether a user exists in the home environment. In an embodiment, the camera may capture the video and may analyze the video to determine whether a user exists in the home environment.

For example, the camera determines whether the user exists in the home environment. In an embodiment, the camera captures the video, and analyzes whether the video includes a portrait. The camera is installed in the home environment. When the video includes the portrait, the camera may determine that a user exists in the home environment. When the video does not include the portrait, the camera may determine that no user exists in the home environment. For example, the camera may determine, by using a portrait detection algorithm, a facial recognition algorithm, or the like, whether the video includes the portrait.

In this embodiment, when the video includes the portrait, the camera may send a user event to the router, where the user event indicates that a user exists in the environment. In an embodiment, the user event sent by the camera may be referred to as a second event. Data that is related to the user and that is obtained by the camera includes the second event.

In an embodiment, the camera may further analyze, based on the facial recognition algorithm, a specific user in the video. The camera may store a user trustlist. The user trustlist stores an identifier of a user who used DLNA screen casting. The identifier of the user may be, for example, a name or a face image of the user. When the camera determines, according to the facial recognition algorithm, that the user in the environment is a user on the trustlist, the camera may send the user event to the router.

The user trustlist may be customized by the user on the first device, and the first device may send the user trustlist to the camera. For example, the user may customize the user trustlist in the AI Life application of the first device. When the user makes the camera access the router by using the AI Life application, the first device may send the user trustlist to the camera.

In this embodiment, it is not like that the camera sends the user event to the router as long as a user exists in the environment, but sends the user event to the router when the user who used DLNA screen casting exists in the environment. There is the user who used DLNA screen casting in the environment. Therefore, there is a high probability that the user uses the DLNA for screen casting again, that is, the user has a strong screen casting intention in the environment. In this case, the camera reports the user event to the router, to ensure that the router can accurately control enabling and disabling of the DLNA function of the second device.

In an embodiment, the camera may always be started, that is, the camera may continuously capture the video. In an embodiment, to reduce power consumption of the camera, when the door is locked, for example, when a status of the door that is sent by the smart lock and that is received by the router is a locked state, the router may indicate the camera to be started, to capture the video. In this way, a video processing amount of the camera can be reduced, and the power consumption of the camera can be reduced.

Second, for example, the detection device is the smart lock and the smart peephole. In the home environment, the smart lock and the smart peephole are installed on the door. The smart lock may detect the status of the door, including the locked state and an open state. For example, a camera or a human body sensor may be disposed in the smart peephole, and the smart peephole may determine whether there is the user outside the door.

In an embodiment, when the door is closed, the smart lock may send, to the router, that the status of the door is the locked state. The user closes the door. Therefore, data that is related to the user and that is obtained by the smart lock includes: The status of the door is the locked state. That the door is locked may be considered as a result of user behavior. Therefore, the door in the locked state may be used as the user behavior data.

The smart peephole may determine whether there is the user outside the door, and report the user event to the router when there is the user outside the door. In an embodiment, the smart peephole may further report a captured video (or image) or human body detection data to the router, and the router determines whether there is the user outside the door. For a manner in which the smart peephole determines whether there is the user outside the door, refer to the related descriptions of determining, by the camera, whether the user exists in the environment. In an embodiment, the user event sent by the smart peephole may be referred to as a third event. Data that is related to the user and that is obtained by the smart peephole includes the third event.

Third, for example, the detection device is the robot (cleaning robot). The cleaning robot may move in the home environment to perform a cleaning task. For example, a camera or a human body sensor is disposed in the cleaning robot, and the cleaning robot may determine whether the user exists in the environment. When determining that the user exists in the environment, the cleaning robot may report the user event to the router. In an embodiment, the user event sent by the cleaning robot may be referred to as a fourth event. Data that is related to the user and that is obtained by the cleaning robot includes the fourth event.

S306A: The router determines, based on the data that is related to the user and that is from the detection device, whether the user exists in the environment. If the user exists in the environment, S306 is performed; or if no user exists in the environment, S314 is performed.

First, in an embodiment, when the router does not receive the user event reported by the camera, it is determined that no user exists in the environment; or when the router receives the user event reported by the camera, it is determined that a user exists in the environment. It should be understood that, when a user exists in the environment, the router determines that the screen casting intention exists in the environment; or when no user exists in the environment, the router determines that no screen casting intention exists in the environment.

FIG. 4C is a diagram of another scenario according to an embodiment of this application. In the home environment, the second device includes the speaker and the television, and the first device is the mobile phone. In FIG. 4C, an example in which the detection device includes the camera, and the DLNA functions of both the speaker and the television are in the disabled state is used. Refer to FIG. 4C. The user is in the home environment, and the camera may capture the video of the home environment, and may determine that the user exists in the home environment. The camera reports the user event to the router, and the router may determine, in response to receiving the user event from the camera, that the user exists in the home environment, that is, the screen casting intention exists in the home environment, and the router may send the first enabling indication to both the speaker and the television. The speaker and the television may enable the DLNA function in response to the first enabling indication.

After the speaker and the television enable the DLNA function, if the user starts the target application on the mobile phone, the operations in the scenario in FIG. 4Ac may be further performed.

Second, in an embodiment, the router may determine, with reference to the status of the door and whether the smart peephole reports the user event, whether a user exists in the environment.

For example, when the status of the door is the locked state, and the router receives the user event reported by the smart peephole, the router determines that the door is locked from outside of the door. When the status of the door is the locked state, but the router does not receive the user event reported by the smart peephole, the router determines that the door is locked from inside of the door. In this embodiment, when the door is locked from outside of the door, it indicates that the user goes out, and the router may determine that no user exists in the environment. When the door is locked from inside of the door, it indicates that the user goes home, and the router may determine that the user exists in the environment.

Third, in an embodiment, when the router does not receive the user event reported by the cleaning robot, it is determined that no user exists in the environment; or when the router receives the user event reported by the cleaning robot, it is determined that a user exists in the environment.

In an embodiment, the router may further determine, with reference to data that is related to the user and that is reported by a plurality of detection devices, whether the user exists in the environment.

For example, when the door is locked from outside of the door, it indicates that the user goes out, and another user may exist in the environment. In this case, the router cannot accurately determine, based on only the data reported by the smart lock and the smart peephole, whether a user exists in the environment. In this embodiment, the router may determine, with reference to the data reported by the camera, the data reported by the smart lock and the smart peephole, or the data reported by the cleaning robot, whether a user exists in the environment. In this embodiment, when the status of the door is the locked state, and the router receives the user event reported by the smart peephole, the router determines that the user goes out, and the router may further accurately determine, with reference to a case in which the camera does not report the user event, that no user exists in the environment.

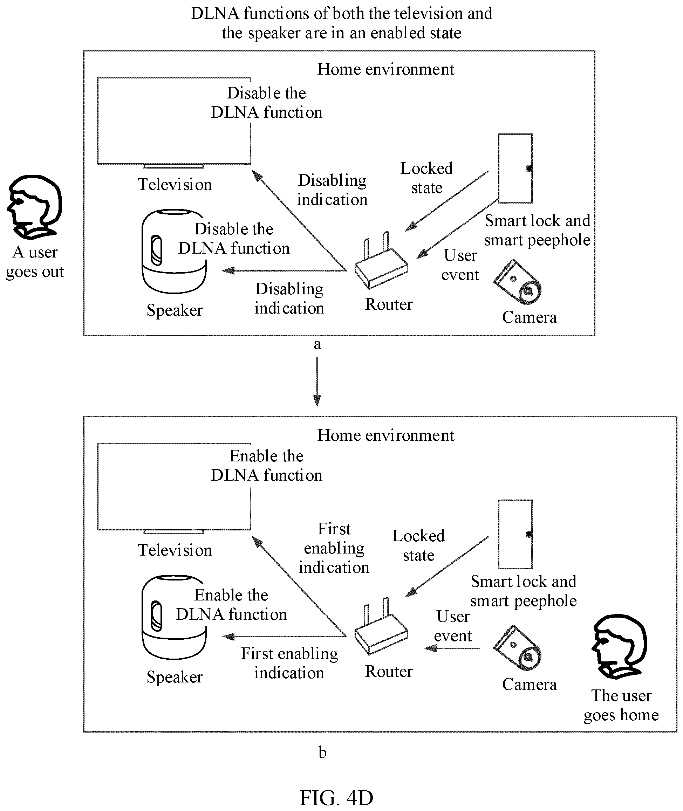

FIG. 4D is a diagram of another scenario according to an embodiment of this application. In the home environment, the second device includes the speaker and the television, and the first device is the mobile phone. In FIG. 4D, an example in which the detection device includes the camera, the smart lock, and the smart peephole, and the DLNA functions of both the speaker and the television are in the enabled state is used. Refer to a in FIG. 4D. If the user goes out, when the door is locked, the smart lock reports, to the router, that the status of the door is the locked state, and the smart peephole determines that there is the user outside the door, and may report the user event to the router. In addition, the camera may capture the video of the home environment, and does not detect that a user exists in the home environment and does not report the user event to the router. In this case, the router may determine, based on the locked state of the door, the user event from the smart peephole, and a case in which the user event from the camera is not received, that no user exists in the home environment, that is, no screen casting intention exists in the home environment. The router may send the closing indication to both the speaker and the television, and the speaker and the television disable the DLNA function in response to the closing indication. It should be understood that, in FIG. 4D, the door indicates the smart lock and the smart peephole.

Refer to b in FIG. 4D. If the user goes home, when the door is locked, the smart lock reports, to the router, that the status of the door is the locked state, and the smart peephole determines that there is no user outside the door, and does not report the user event to the router. In addition, the camera may capture the video of the home environment, and determine that a user exists in the home environment. The camera may report the user event to the router. In this scenario, the router may determine, based on the locked state of the door, a case in which the user event from the smart peephole is not received, and the user event received from the camera, that the user exists in the home environment, that is, the screen casting intention exists in the home environment. The router may send the first enabling indication to both the speaker and the television. The speaker and the television may enable the DLNA function in response to the first enabling indication.

If the user starts the video application on the mobile phone, and the video application has the screen casting function, the mobile phone may send the target application start event to the router. The router may send the second enabling indication to both the speaker and the television in response to the target application start event. The speaker and the television may both send the notify multicast in response to the second enabling indication. For details, refer to the related descriptions in FIG. 4Ac.

In this embodiment of this application, the router may determine, with reference to the data that is related to the user and that is reported by the detection device in the environment, whether the user exists in the environment, to indicate the second device to enable or disable the DLNA function. This is simple and flexible without the user operation. In addition, when the user really has the screen casting intention, for example, when the user starts the target application, the router controls and indicates the second device to start to send the notify multicast, so that multicast is performed in the targeted manner, the bandwidth occupied by the notify multicast can be reduced, and the waste of the bandwidth resources can be reduced.

If the router controls, based on that the accessed device includes the first device (mobile phone), the second device to enable the DLNA function, in a possible scenario, for example, the mobile phone accesses the router before the user goes home, and no one is at home in this case. Although the DLNA function of the second device can be enabled in advance in this manner, control precision is low, and power consumption of the second device is wasted. In a possible scenario, if the camera installed in the home environment does not cover each location in the environment, the router cannot accurately determine, based on only the data reported by the camera, whether a user exists in the environment. In this scenario, the control accuracy of the router is also low.

In an embodiment, the router may control, with reference to the data that is related to the user and that is obtained by the detection device and the device that accesses the router in S305, the second device to enable or disable the DLNA function, to improve accuracy of controlling the second device.

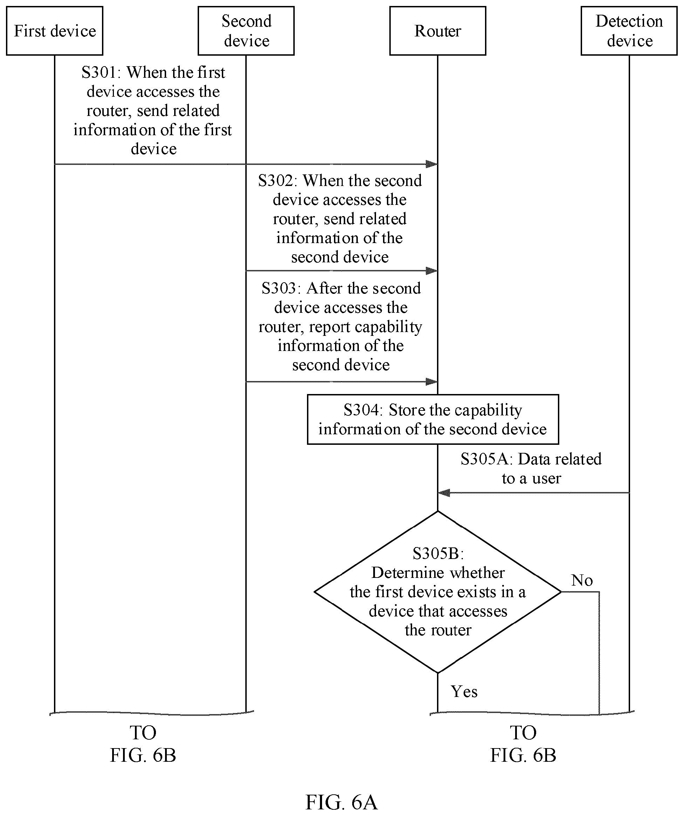

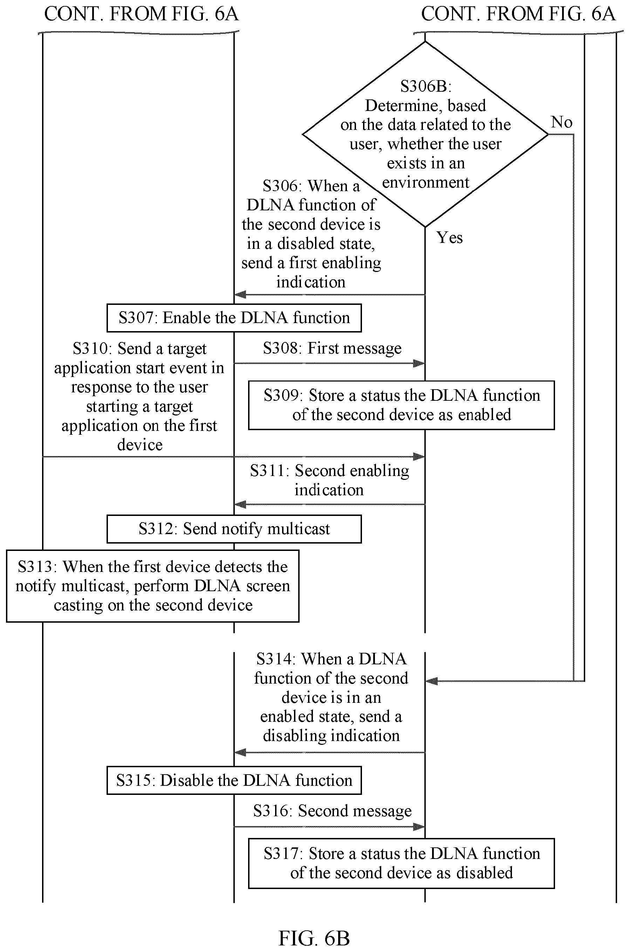

Refer to FIG. 6A and FIG. 6B. S305 may be replaced with S305B and S305B.

S305B: The router determines whether the first device exists in the device that accesses the router. If the first device exists in the device that accesses the router, S306B is performed; or if the first device does not exist in the device that accesses the router, S314 is performed.

For S305B, refer to the related descriptions in S305.

S306B: The router determines, based on the data that is related to the user and that is from the detection device, whether the user exists in the environment. If the user exists in the environment, S306 is performed; or if no user exists in the environment, S314 is performed.

For S306B, refer to the related descriptions in S305A and S306A. It should be understood that S305A may be performed before S306B.

In an embodiment, an execution sequence of S305B and S306B may be exchanged.

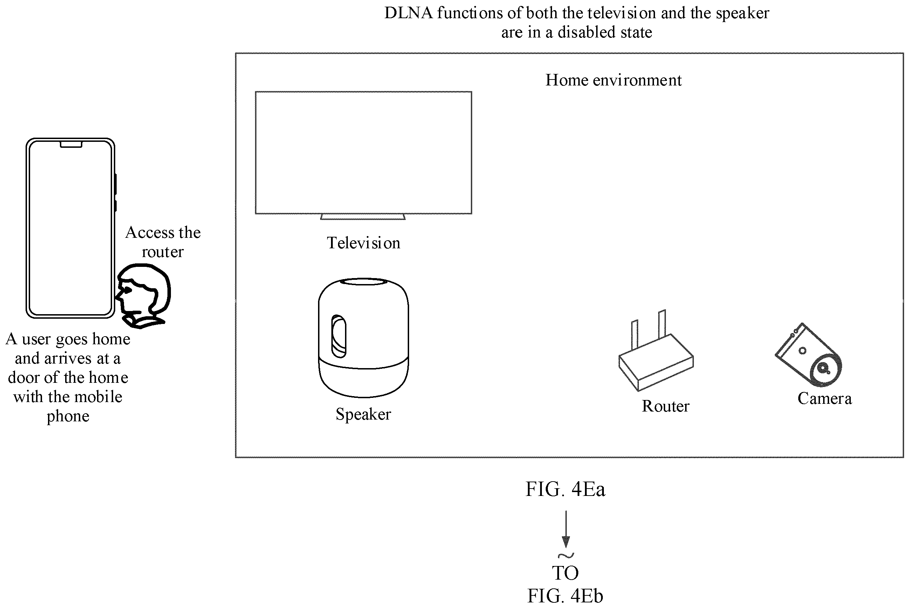

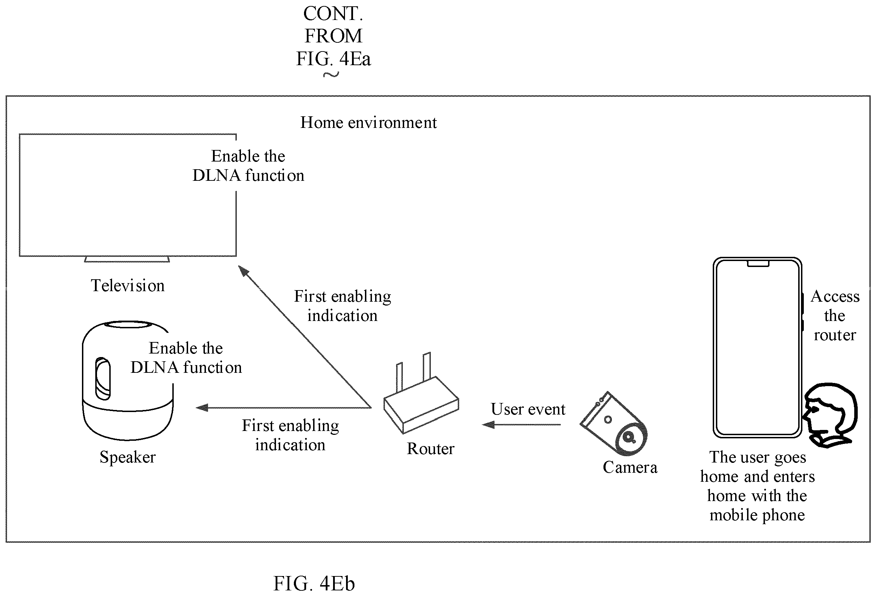

FIG. 4Ea and FIG. 4Eb are diagrams of another scenario according to an embodiment of this application. In the home environment, the second device includes the speaker and the television, and the first device is the mobile phone. In FIG. 4Ea and FIG. 4Eb, an example in which the detection device is the camera, and the DLNA functions of both the speaker and the television are in the disabled state is used. Refer to FIG. 4Ea. When the user arrives at the door of the home with the mobile phone, the mobile phone accesses the router. However, in this case, the camera determines that no user exists in the environment, and may not report the user event to the router. In this scenario, if the router determines that the first device exists in the device that accesses the router, but does not receive the user event from the camera, the router may not respond. Refer to FIG. 4Eb, when the user enters the home environment with the mobile phone, the camera determines that the user exists in the environment, and may report the user event to the router. In this scenario, the router determines that the first device exists in the device that accesses the router, and receives the user event from the camera. The router may determine that the screen casting intention exists in the environment, and the router may send the first enabling indication to both the speaker and the television. The speaker and the television enable the DLNA function in response to the first enabling indication.

After enabling the DLNA function, the speaker and the television may both further send the notify multicast in response to the second enabling indication from the router. For details, refer to the related descriptions in FIG. 4Ac.

In this embodiment of this application, the router may control, with reference to the data that is related to the user and that is reported by the detection device and the information of the device that accesses the router, the second device to enable or disable the DLNA function, so that the accuracy of controlling enabling and disabling of the DLNA function can be improved.

In the foregoing embodiments, when it is determined that the screen casting intention exists in the environment, the router sends the first enabling indication to the second device that accesses the router, to indicate the second device to enable the DLNA function. The second device is all screen casting destination end devices that access the router. In all the screen casting destination end devices that access the router, different types of screen casting destination ends support different screen casting types. For example, the speaker supports audio screen casting, and the smart screen and the television support both the audio screen casting and video screen casting. When the screen casting intention exists in the environment, for example, if the user expects to cast a video, the router controls the speaker to send the notify multicast. However, the speaker does not support the video screen casting, and the notify multicast sent by the speaker still wastes the bandwidth resources.

In an embodiment, to implement precise control, when the first device performs S310, the target application start event sent by the first device to the router may carry an identifier of a type of the target application. The identifier of the type of the target application indicates that the target application is the video application or the audio application, that is, a screen casting type supported by the target application. Correspondingly, when the router performs S311, the router may send the first enabling indication to a target second device in response to the target application start event. The router may query the capability information of the second device based on the identifier of the type of the target application carried in the target application start event, to determine the target second device.

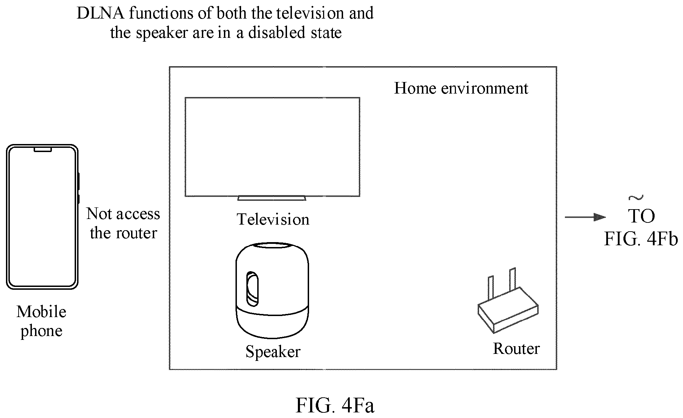

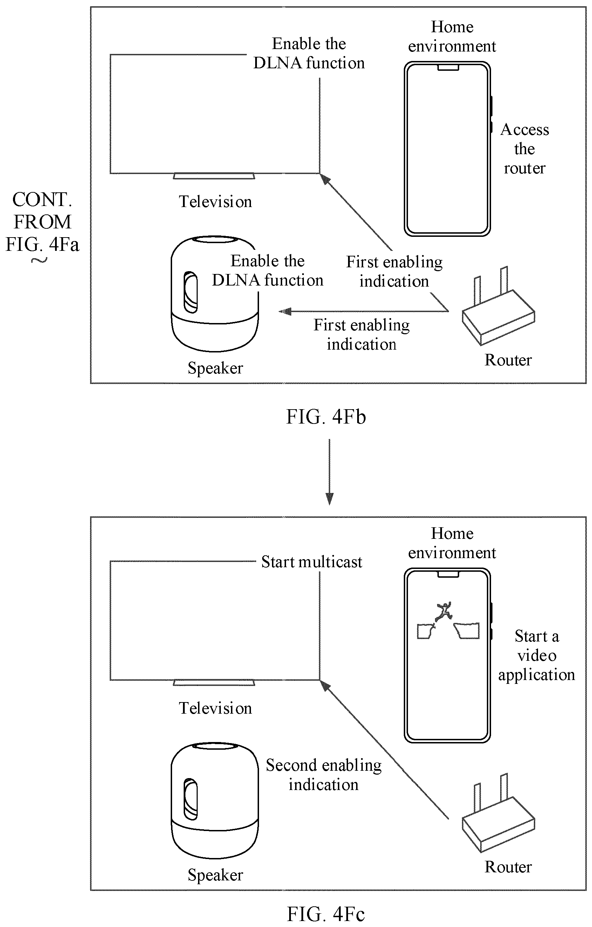

The target second device is a second device that supports screen casting of the target application. For example, as shown in FIG. 4Fc, the user opens the video application on the mobile phone, and the mobile phone may send the target application start event to the router. The router may send, in response to the target application start event, the second enabling indication to the television that supports the video screen casting, and skip sending the second enabling indication to the speaker that does not support the video screen casting. In this way, the television may send the notify multicast, and the speaker does not send the notify multicast, so that the bandwidth occupied by the multicast can be reduced. It should be understood that FIG. 4Fa and FIG. 4Fb may be the same as FIG. 4Aa and FIG. 4Ab. For details, refer to the related descriptions in FIG. 4Aa and FIG. 4Ab.

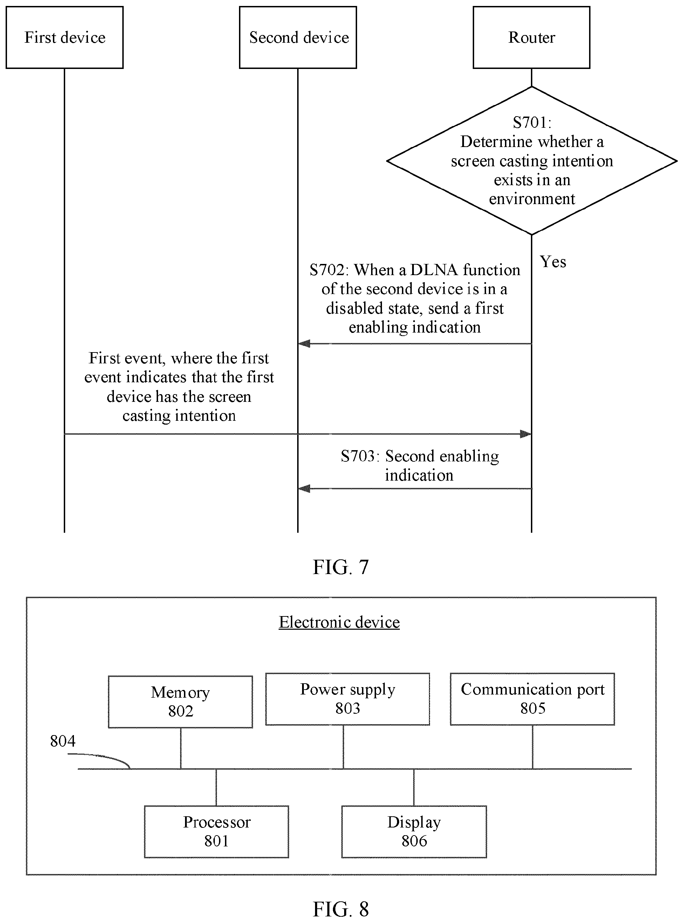

In an embodiment, an embodiment of this application provides a screen casting method. Refer to FIG. 7. The method may include the following steps.

S701: Determine whether a screen casting intention exists in an environment.

In an embodiment, a router and a hub device may determine whether the screen casting intention exists in the environment.

The router may query a device that accesses the router. If it is determined that the device that accesses the router includes a first device, it is determined that the screen casting intention exists in the environment. For details, refer to the related descriptions in S305. Alternatively, the router may alternatively determine, based on data that is related to a user and that is from a detection device, whether the screen casting intention exists in the environment. Alternatively, the router may alternatively determine, based on the device that accesses the router and the data that is related to the user and that is from the detection device, whether the screen casting intention exists in the environment. For details, refer to the related descriptions in S306A and S305B and S306B.

The hub device may receive, via the router, the data that is related to the user and that is from the detection device, and the router may further send device information to the hub device. For determining, by the hub device, whether the screen casting intention exists in the environment, refer to the related descriptions of determining, by the router, whether the screen casting intention exists in the environment.

In an embodiment, the detection device may determine whether the screen casting intention exists in the environment. When determining that a user exists in the environment, the detection device may determine that the screen casting intention exists in the environment. The detection device may include but is not limited to a camera, a smart lock, and a smart peephole. For determining, by the detection device, whether the user exists in the environment, refer to the related descriptions in S305A and S306A. In this embodiment, if both the first device and a second device are connected to the detection device, when determining whether the screen casting intention exists in the environment, the detection device may interact with the first device and the second device, to perform S702 and S703.

It should be understood that, in FIG. 7, an example in which the screen casting method is performed by the router is used for description.

S702: When the screen casting intention exists in the environment and a DLNA function of the second device in the environment is in a disabled state, send a first enabling indication to the second device, where the first enabling indication indicates the second device to enable the DLNA function.

S703: Send a second enabling indication to the second device in response to receiving a first event from the first device, where the first event indicates that the first device has the screen casting intention, the second enabling indication indicates the second device to send multicast, and the multicast is used by the first device to discover the second device for screen casting.

For S702, refer to the related descriptions in S306 to S313. For S703, refer to the related descriptions in S314.

In an embodiment, an embodiment of this application further provides an electronic device. The electronic device may be the first device, the second device, the router, or the hub device in the foregoing embodiments. Refer to FIG. 8. The electronic device may include a processor 801 (for example, a CPU) and a memory 802. The memory 802 may include a high-speed random access memory (random access memory, RAM), or may further include a non-volatile memory (non-volatile memory, NVM), for example, at least one disk memory. The memory 802 may store various instructions, to complete various processing functions and implement the method steps of this application.

Optionally, the electronic device in this application may further include a power supply 803, a communication bus 804, and a communication port 805. The communication port 805 is configured to implement connection and communication between the electronic device and another peripheral. In this embodiment of this application, the memory 802 is configured to store computer-executable program code. The program code includes instructions. When the processor 801 executes the instructions, the instructions cause the processor 801 of the electronic device to perform the actions in the foregoing method embodiments. Implementation principles and technical effect of the processor 801 are similar to those of the method embodiments. Details are not described herein again.

In an embodiment, when the electronic device is the first device or the second device, the electronic device may further include a display 806. The display 806 is configured to display an interface.

It should be noted that the modules or components in the foregoing embodiments may be configured as one or more integrated circuits for implementing the foregoing methods, for example, one or more application-specific integrated circuits (application-specific integrated circuit, ASIC), one or more microprocessors (digital signal processor, DSP), or one or more field programmable gate arrays (field programmable gate array, FPGA). For another example, when one of the foregoing modules is implemented in a form of a processing element scheduling program code, the processing element may be a general-purpose processor, for example, a central processing unit (central processing unit, CPU) or another processor, for example, a controller, that may invoke the program code. For another example, these modules may be integrated together and implemented in a form of a system-on-a-chip (system-on-a-chip, SoC).

All or some of the foregoing embodiments may be implemented by software, hardware, firmware, or any combination thereof. When software is used to implement embodiments, all or some embodiments may be implemented in a form of a computer program product. The computer program product includes one or more computer instructions. When computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid-State Drive (SSD)), or the like.

A term "a plurality of" in this specification means two or more. A term "and/or" in this specification describes only an association relationship between associated objects and indicates that three relationships may exist. For example, A and/or B may indicate the following three cases: Only A exists, both A and B exist, and only B exists. In addition, a character "/" in this specification usually indicates an "or" relationship between the associated objects. In a formula, the character "/" indicates a "division" relationship between the associated objects. In addition, it should be understood that in the description of this application, terms such as "first" and "second" are merely used for distinguishing and description, but should not be understood as indicating or implying relative importance, or should not be understood as indicating or implying a sequence.

It may be understood that various numbers in embodiments of this application are merely used for distinguishing for ease of description and are not used to limit the scope of this application.

It may be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

## Claims

1. A screen casting method, comprising:
determining whether a screen casting intention exists in an environment;
when the screen casting intention exists in the environment and a digital living network alliance ,DLNA, function of a second device in the environment is in a disabled state, sending a first enabling indication to the second device, wherein the first enabling indication indicates the second device to enable the DLNA function; and
sending a second enabling indication to the second device in response to receiving a first event from a first device, wherein the first event indicates that the first device has the screen casting intention, the second enabling indication indicates the second device to send multicast, and the multicast is used by the first device to discover the second device for screen casting.

2. The method according to claim 1, wherein the environment comprises an access point, and the determining whether a screen casting intention exists in an environment comprises:
querying whether the first device exists in a device that accesses the access point; and
if the first device exists in the device that accesses the access point, determining that the screen casting intention exists in the environment.

3. The method according to claim 1, wherein the environment comprises a detection device, and the determining whether a screen casting intention exists in an environment comprises:
receiving data reported by the detection device; and
determining, based on the data, whether the screen casting intention exists in the environment.

4. The method according to claim 3, wherein the detection device comprises at least one of the following: a camera, a smart lock, and a smart peephole.

5. The method according to claim 4, wherein the detection device comprises the camera, and the camera is configured to: capture a video of the environment and determine whether a user exists in the video; and
the determining, based on the data, whether the screen casting intention exists in the environment comprises:
if a second event from the camera is received, determining that the screen casting intention exists in the environment, wherein the second event indicates that the user exists in the video.

6. The method according to claim 4, wherein the detection device comprises the smart lock and the smart peephole, the smart lock is configured to detect a status of a door in the environment, and the smart peephole is configured to determine whether there is a user at the door; and
the determining, based on the data, whether the screen casting intention exists in the environment comprises:
if a locked state from the smart lock is received, and a third event from the smart peephole is not received, determining that the screen casting intention exists in the environment, wherein the locked state indicates that the door is locked, and the third event indicates that there is the user at the door; or
if a locked state from the smart lock is received, and a third event from the smart peephole is received, determining that no screen casting intention exists in the environment.

7. The method according to claim 1, wherein the environment comprises an access point and a detection device, and the determining whether a screen casting intention exists in an environment comprises:
querying whether the first device exists in a device that accesses the access point; and determining, based on data reported by the detection device, whether the screen casting intention exists in the environment.

8. The method according to any one of claims 1 to 7, wherein the environment comprises the access point, and before the determining whether a screen casting intention exists in an environment, the method further comprises:
when the second device accesses the access point, obtaining a device type of the second device;
after the second device accesses the access point, receiving capability information reported by the second device; and
updating the capability information of the second device based on the device type of the second device, wherein updated capability information of the second device comprises a screen casting type supported by the second device.

9. The method according to claim 8, wherein there is at least one second device, the first event further indicates a screen casting type of the first device, and the sending a second enabling indication to the second device comprises:
determining, from the at least one second device based on the updated capability information of the second device, a target second device that supports the screen casting type of the first device; and
sending the second enabling indication to the target second device.

10. The method according to claim 9, wherein when the user starts a target application on the first device, the first device has the screen casting intention, and the screen casting type of the first device is a screen casting type supported by the target application; or
when the user starts the target application on the first device, and the user inputs a screen casting operation to the first device, the first device has the screen casting intention.

11. The method according to any one of claims 1 to 7, wherein after the sending a first enabling indication to the second device, the method further comprises:
receiving a first message from the second device, wherein the first message indicates that the second device enables the DLNA function; and
storing a status of the DLNA function of the second device as enabled.

12. The method according to claim 1, wherein the method further comprises:
when no screen casting intention exists in the environment and the DLNA function of the second device is in an enabled state, sending a closing indication to the second device, wherein the closing indication indicates the second device to disable the DLNA function.

13. An electronic device, comprising a processor and a memory, wherein
the memory stores computer instructions; and
the processor executes the computer instructions stored in the memory, so that the processor performs the method according to any one of claims 1 to 12.

14. A computer-readable storage medium, wherein the computer-readable storage medium stores a computer program or instructions, and when the computer program or the instructions are run, the method according to any one of claims 1 to 12 is implemented.

15. A program product, wherein the program product comprises a computer program, the computer program is stored in a readable storage medium, at least one processor of a communication apparatus may read the computer program from the readable storage medium, and the at least one processor executes the computer program, so that the communication apparatus implements the method according to any one of claims 1 to 12.

## Patentansprüche

1. Bildschirmverteilverfahren, das Folgendes umfasst:
Bestimmen, ob eine Bildschirmverteilabsicht in einer Umgebung vorhanden ist;
wenn die Bildschirmverteilabsicht in der Umgebung vorhanden ist und eine Funktion der "Digital Living Network Alliance", DLNA-Funktion, einer zweiten Einrichtung in der Umgebung in einem deaktivierten Zustand ist, Senden einer ersten Aktivierungsangabe zur zweiten Einrichtung, wobei die erste Aktivierungsangabe angibt, dass die zweite Einrichtung die DLNA-Funktion aktivieren soll; und
Senden einer zweiten Aktivierungsangabe zur zweiten Einrichtung in Reaktion auf ein Empfangen eines ersten Ereignisses von einer ersten Einrichtung, wobei das erste Ereignis angibt, dass die erste Einrichtung die Bildschirmverteilabsicht aufweist, die zweite Aktivierungsangabe der zweiten Einrichtung angibt, einen Multicast zu senden, und der Multicast durch die erste Einrichtung verwendet wird, um die zweite Einrichtung zum Bildschirmverteilen zu entdecken.

2. Verfahren nach Anspruch 1, wobei die Umgebung einen Zugangspunkt umfasst und das Bestimmen, ob eine Bildschirmverteilabsicht in einer Umgebung vorhanden ist, Folgendes umfasst:
Abfragen, ob die erste Einrichtung in einer Einrichtung vorhanden ist, die auf den Zugangspunkt zugreift; und,
falls die erste Einrichtung in der Einrichtung vorhanden ist, die auf den Zugangspunkt zugreift, Bestimmen, dass die Bildschirmverteilabsicht in der Umgebung vorhanden ist.

3. Verfahren nach Anspruch 1, wobei die Umgebung eine Detektionseinrichtung umfasst und das Bestimmen, ob eine Bildschirmverteilabsicht in einer Umgebung vorhanden ist, Folgendes umfasst:
Empfangen von Daten, die durch die Detektionseinrichtung berichtet werden; und
Bestimmen auf der Grundlage der Daten, ob die Bildschirmverteilabsicht in der Umgebung vorhanden ist.

4. Verfahren nach Anspruch 3, wobei die Detektionseinrichtung mindestens eines von Folgendem umfasst: eine Kamera, ein intelligentes Schloss und einen intelligenten Türspion.

5. Verfahren nach Anspruch 4, wobei die Detektionseinrichtung die Kamera umfasst und die Kamera konfiguriert ist zum Aufnehmen eines Videos der Umgebung und Bestimmen, ob ein Benutzer im Video vorhanden ist; und
das Bestimmen auf der Grundlage der Daten, ob die Bildschirmverteilabsicht in der Umgebung vorhanden ist, Folgendes umfasst:
falls ein zweites Ereignis von der Kamera empfangen wird, Bestimmen, dass die Bildschirmverteilabsicht in der Umgebung vorhanden ist, wobei das zweite Ereignis angibt, dass der Benutzer im Video vorhanden ist.

6. Verfahren nach Anspruch 4, wobei die Detektionseinrichtung das intelligente Schloss und den intelligenten Türspion umfasst, das intelligente Schloss konfiguriert ist, einen Status einer Tür in der Umgebung zu detektieren, und der intelligente Türspion konfiguriert ist, zu bestimmen, ob ein Benutzer bei der Tür vorhanden ist; und
das Bestimmen auf der Grundlage der Daten, ob die Bildschirmverteilabsicht in der Umgebung vorhanden ist, Folgendes umfasst:
falls ein verriegelter Zustand vom intelligenten Schloss empfangen wird und kein drittes Ereignis vom intelligenten Türspion empfangen wird, Bestimmen, dass die Bildschirmverteilabsicht in der Umgebung vorhanden ist, wobei der verriegelte Zustand angibt, dass die Tür verriegelt ist, und das dritte Ereignis angibt, dass der Benutzer bei der Tür vorhanden ist; oder,
falls ein verriegelter Zustand vom intelligenten Schloss empfangen wird und ein drittes Ereignis vom intelligenten Türspion empfangen wird, Bestimmen, dass keine Bildschirmverteilabsicht in der Umgebung vorhanden ist.

7. Verfahren nach Anspruch 1, wobei die Umgebung einen Zugangspunkt und eine Detektionseinrichtung umfasst und das Bestimmen, ob eine Bildschirmverteilabsicht in einer Umgebung vorhanden ist, Folgendes umfasst:
Abfragen, ob die erste Einrichtung in einer Einrichtung vorhanden ist, die auf den Zugangspunkt zugreift; und Bestimmen auf der Grundlage von Daten, die durch die Detektionseinrichtung berichtet werden, ob die Bildschirmverteilabsicht in der Umgebung vorhanden ist.

8. Verfahren nach einem der Ansprüche 1 bis 7, wobei die Umgebung den Zugangspunkt umfasst und das Verfahren vor dem Bestimmen, ob eine Bildschirmverteilabsicht in einer Umgebung vorhanden ist, ferner Folgendes umfasst:
wenn die zweite Einrichtung auf den Zugangspunkt zugreift, Erhalten eines Einrichtungstyps der zweiten Einrichtung;
nachdem die zweite Einrichtung auf den Zugangspunkt zugegriffen hat, Empfangen von Leistungsfähigkeitsinformationen, die durch die zweite Einrichtung berichtet werden; und
Aktualisieren der Leistungsfähigkeitsinformationen der zweiten Einrichtung auf der Grundlage des Einrichtungstyps der zweiten Einrichtung, wobei aktualisierte Leistungsfähigkeitsinformationen der zweiten Einrichtung einen Bildschirmverteilungstyp umfassen, der durch die zweite Einrichtung unterstützt wird.

9. Verfahren nach Anspruch 8, wobei mindestens eine zweite Einrichtung vorhanden ist, das erste Ereignis ferner einen Bildschirmverteilungstyp der ersten Einrichtung angibt und das Senden einer zweiten Aktivierungsangabe zur zweiten Einrichtung Folgendes umfasst:
Bestimmen von der mindestens einen zweiten Einrichtung auf der Grundlage der aktualisierten Leistungsfähigkeitsinformationen der zweiten Einrichtung einer zweiten Zieleinrichtung, die den Bildschirmverteilungstyp der ersten Einrichtung unterstützt; und
Senden der zweiten Aktivierungsangabe zur zweiten Zieleinrichtung.

10. Verfahren nach Anspruch 9, wobei, wenn der Benutzer eine Zielanwendung in der ersten Einrichtung startet, die erste Einrichtung die Bildschirmverteilabsicht aufweist und der Bildschirmverteilungstyp der ersten Einrichtung ein Bildschirmverteilungstyp ist, der durch die Zielanwendung unterstützt wird; oder,
wenn der Benutzer die Zielanwendung in der ersten Einrichtung startet und der Benutzer eine Bildschirmverteilungsoperation zur ersten Einrichtung eingibt, die erste Einrichtung die Bildschirmverteilabsicht aufweist.

11. Verfahren nach einem der Ansprüche 1 bis 7, wobei das Verfahren nach dem Senden einer ersten Aktivierungsangabe zur zweiten Einrichtung ferner Folgendes umfasst:
Empfangen einer ersten Nachricht von der zweiten Einrichtung, wobei die erste Nachricht angibt, dass die zweite Einrichtung die DLNA-Funktion aktiviert; und
Speichern eines Status der DLNA-Funktion der zweiten Einrichtung als aktiviert.

12. Verfahren nach Anspruch 1, wobei das Verfahren ferner Folgendes umfasst:
wenn keine Bildschirmverteilabsicht in der Umgebung vorhanden ist und die DLNA-Funktion der zweiten Einrichtung in einem aktivierten Zustand ist, Senden einer Schließangabe zur zweiten Einrichtung, wobei die Schließangabe der zweiten Einrichtung angibt, die DLNA-Funktion zu deaktivieren.

13. Elektronische Einrichtung, die einen Prozessor und einen Speicher umfasst, wobei der Speicher Computerbefehle speichert und
der Prozessor die Computerbefehle, die im Speicher gespeichert sind, ausführt, derart, dass der Prozessor das Verfahren nach einem der Ansprüche 1 bis 12 durchführt.

14. Computerlesbares Speichermedium, wobei das computerlesbare Speichermedium ein Computerprogramm oder Befehle speichert und, wenn das Computerprogramm oder die Befehle ausgeführt werden, das Verfahren nach einem der Ansprüche 1 bis 12 implementiert wird.

15. Programmprodukt, wobei das Programmprodukt ein Computerprogramm umfasst, das Computerprogramm in einem lesbaren Speichermedium gespeichert ist, mindestens ein Prozessor einer Kommunikationsvorrichtung das Computerprogramm aus dem lesbaren Speichermedium lesen kann und der mindestens eine Prozessor das Computerprogramm derart ausführt, dass die Kommunikationsvorrichtung das Verfahren nach einem der Ansprüche 1 bis 12 implementiert.

## Revendications

1. Procédé de diffusion d'écran, comprenant :
la détermination si une intention de diffusion d'écran existe dans un environnement ;
lorsque l'intention de diffusion d'écran existe dans l'environnement et qu'une fonction d'alliance de réseau domestique numérique DLNA d'un second dispositif dans l'environnement est dans un état désactivé, l'envoi d'une première indication d'activation au second dispositif, la première indication d'activation indiquant au second dispositif d'activer la fonction DLNA ; et
l'envoi d'une seconde indication d'activation au second dispositif en réponse à la réception d'un premier événement depuis un premier dispositif, le premier événement indiquant que le premier dispositif a l'intention de diffusion d'écran, la seconde indication d'activation indiquant au second dispositif d'envoyer en multidiffusion, et la multidiffusion étant utilisée par le premier dispositif pour découvrir le second dispositif pour la diffusion d'écran.

2. Procédé selon la revendication 1, l'environnement comprenant un point d'accès, et la détermination si une intention de diffusion d'écran existe dans un environnement comprenant :
l'interrogation de l'existence du premier dispositif dans un dispositif qui accède au point d'accès ; et
si le premier dispositif existe dans le dispositif qui accède au point d'accès, la détermination que l'intention de diffusion d'écran existe dans l'environnement.

3. Procédé selon la revendication 1, l'environnement comprenant un dispositif de détection, et la détermination si une intention de diffusion d'écran existe dans un environnement comprenant :
la réception de données rapportées par le dispositif de détection ; et
la détermination, sur la base des données, si l'intention de diffusion d'écran existe dans l'environnement.

4. Procédé selon la revendication 3, le dispositif de détection comprenant au moins un des éléments suivants : une caméra, une serrure intelligente et un judas intelligent.

5. Procédé selon la revendication 4, le dispositif de détection comprenant la caméra, et la caméra étant configurée pour : capturer une vidéo de l'environnement et déterminer l'existence d'un utilisateur dans la vidéo ; et
la détermination, sur la base des données, si l'intention de diffusion d'écran existe dans l'environnement comprenant :
si un deuxième événement depuis la caméra est reçu, la détermination que l'intention de diffusion d'écran existe dans l'environnement, le deuxième événement indiquant l'existence de l'utilisateur dans la vidéo.

6. Procédé selon la revendication 4, le dispositif de détection comprenant la serrure intelligente et le judas intelligent, la serrure intelligente étant configurée pour détecter un statut d'une porte dans l'environnement, et le judas intelligent étant configuré pour déterminer l'existence d'un utilisateur à la porte ; et
la détermination, sur la base des données, si l'intention de diffusion d'écran existe dans l'environnement comprenant :
si un état verrouillé depuis la serrure intelligente est reçu, et qu'un troisième événement depuis le judas intelligent n'est pas reçu, la détermination que l'intention de diffusion d'écran existe dans l'environnement, l'état verrouillé indiquant que la porte est verrouillée, et le troisième événement indiquant l'existence de l'utilisateur à la porte ; ou
si un état verrouillé depuis la serrure intelligente est reçu, et qu'un troisième événement depuis le judas intelligent est reçu, la détermination qu'aucune intention de diffusion d'écran n'existe dans l'environnement.

7. Procédé selon la revendication 1, l'environnement comprenant un point d'accès et un dispositif de détection, et la détermination si une intention de diffusion d'écran existe dans un environnement comprenant :
l'interrogation de l'existence du premier dispositif dans un dispositif qui accède au point d'accès ; et la détermination, sur la base des données rapportées par le dispositif de détection, si l'intention de diffusion d'écran existe dans l'environnement.

8. Procédé selon l'une quelconque des revendications 1 à 7, l'environnement comprenant le point d'accès, et avant la détermination si une intention de diffusion d'écran existe dans un environnement, le procédé comprenant en outre :
lorsque le second dispositif accède au point d'accès, l'obtention d'un type de dispositif du second dispositif ;
après que le second dispositif accède au point d'accès, la réception d'informations de capacité rapportées par le second dispositif ; et
la mise à jour des informations de capacité du second dispositif sur la base du type de dispositif du second dispositif, les informations de capacité mises à jour du second dispositif comprenant un type de diffusion d'écran pris en charge par le second dispositif.

9. Procédé selon la revendication 8, au moins un second dispositif existant, le premier événement indiquant en outre un type de diffusion d'écran du premier dispositif, et l'envoi d'une seconde indication d'activation au second dispositif comprenant :
la détermination, depuis l'au moins un second dispositif sur la base des informations de capacité mises à jour du second dispositif, d'un second dispositif cible qui prend en charge le type de diffusion d'écran du premier dispositif ; et
l'envoi de la seconde indication d'activation au second dispositif cible.

10. Procédé selon la revendication 9, lorsque l'utilisateur démarre une application cible sur le premier dispositif, le premier dispositif ayant l'intention de diffusion d'écran, et le type de diffusion d'écran du premier dispositif étant un type de diffusion d'écran pris en charge par l'application cible ; ou
lorsque l'utilisateur démarre l'application cible sur le premier dispositif, et que l'utilisateur saisit une opération de diffusion d'écran sur le premier dispositif, le premier dispositif ayant l'intention de diffusion d'écran.

11. Procédé selon l'une quelconque des revendications 1 à 7, après l'envoi d'une première indication d'activation au second dispositif, le procédé comprenant en outre :
la réception d'un premier message depuis le second dispositif, le premier message indiquant que le second dispositif active la fonction DLNA ; et
le stockage d'un statut de la fonction DLNA du second dispositif comme activé.

12. Procédé selon la revendication 1, le procédé comprenant en outre :
lorsqu'aucune intention de diffusion d'écran n'existe dans l'environnement et que la fonction DLNA du second dispositif est dans un état activé, l'envoi d'une indication de fermeture au second dispositif, l'indication de fermeture indiquant au second dispositif de désactiver la fonction DLNA.

13. Dispositif électronique, comprenant un processeur et une mémoire,
la mémoire stockant des instructions informatiques ; et
le processeur exécutant les instructions informatiques stockées dans la mémoire, de sorte que le processeur réalise le procédé selon l'une quelconque des revendications 1 à 12.

14. Support de stockage lisible par ordinateur, le support de stockage lisible par ordinateur stockant un programme informatique ou des instructions, et lorsque le programme informatique ou les instructions sont exécutés, le procédé selon l'une quelconque des revendications 1 à 12 étant mis en œuvre.

15. Produit de programme, le produit de programme comprenant un programme informatique, le programme informatique étant stocké dans un support de stockage lisible, au moins un processeur d'un appareil de communication pouvant lire le programme informatique depuis le support de stockage lisible, et l'au moins un processeur exécutant le programme informatique, de sorte que l'appareil de communication met en œuvre le procédé selon l'une quelconque des revendications 1 à 12.
